(19) Europäisches Patentamt

European Patent Office

Office européen des brevets

(11) EP 2 540 663 B1

(12) **EUROPEAN PATENT SPECIFICATION**

(45) Date of publication and mention of the grant of the patent:
**31.07.2019 Bulletin 2019/31**

(51) Int Cl.:
*C01B 3/16* (2006.01)     *C10J 3/00* (2006.01)
*C10K 3/04* (2006.01)

(21) Application number: **11172052.0**

(22) Date of filing: **30.06.2011**

(54) **Method for adjusting hydrogen to carbon monoxide ratio in synthesis gas**

Verfahren zur Anpassung des Wasserstoff-Kohlenmonoxidverhältnisses in Synthesegas

Procédé d'ajustement du rapport d'hydrogène en monoxyde de carbone dans un gaz synthétique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.01.2013 Bulletin 2013/01**

(73) Proprietor: **Neste Oyj**
**02150 Espoo (FI)**

(72) Inventors:
 • **Eilos, Isto**
  **06150 Porvoo (FI)**
 • **Koskinen, Jukka**
  **02160 Espoo (FI)**
 • **Tiitta, Marja**
  **06150 Porvoo (FI)**
 • **Toppinen, Sami**
  **00370 Helsinki (FI)**
 • **Vuori, Heli**
  **02630 Espoo (FI)**

(74) Representative: **Espatent Oy**
  **Kaivokatu 10 D**
  **00100 Helsinki (FI)**

(56) References cited:
 **WO-A1-2010/017372    US-A1- 2008 300 327**
 **US-A1- 2009 246 120**

 • **MARONO M ET AL: "Hydrogen-rich gas production from oxygen pressurized gasification of biomass using a Fe-Cr Water Gas Shift catalyst", INTERNATIONAL JOURNAL OF HYDROGEN ENERGY, ELSEVIER SCIENCE PUBLISHERS B.V., BARKING, GB, vol. 35, no. 1, 1 January 2010 (2010-01-01), pages 37-45, XP026816659, ISSN: 0360-3199 [retrieved on 2009-11-12]**
 • **M. W. WILSON ET AL: "Shift Conversion of Synthesis Gas Containing Sulfur, Dust, and Carbon Dioxide", INDUSTRIAL & ENGINEERING CHEMISTRY PROCESS DESIGN AND DEVELOPMENT, vol. 7, no. 4, 1 October 1968 (1968-10-01) , pages 526-529, XP55010570, ISSN: 0196-4305, DOI: 10.1021/i260028a008**
 • **RATNASAMY, C., WAGNER, J. P.: "Water Gas Shift Catalysis", CATALYSIS REVIEWS, vol. 51, no. 3, 2009, pages 325-440, XP8124903,**
 • **DATABASE COMPENDEX [Online] ENGINEERING INFORMATION, INC., NEW YORK, NY, US; March 1988 (1988-03), ZHEN LE ET AL: "INVESTIGATION ON SULFUR POISONING KINETICS FOR THE HIGH TEMPERATURE SHIFT REACTION OVER THE B108 CATALYST.", XP002662303, Database accession no. EIX88100139295 & ZHEN LE ET AL: "INVESTIGATION ON SULFUR POISONING KINETICS FOR THE HIGH TEMPERATURE SHIFT REACTION OVER THE B108 CATALYST.", HUAXUE FANYING GONGCHENG YU GONGYI/CHEMICAL REACTION ENGINEERING AND TECHNOLOGY 1988 MAR, vol. 4, no. 1, March 1988 (1988-03), pages 17-29,**

**EP 2 540 663 B1**

**Description**

**Technical field**

The present method is related to the field of hydrocarbon processing. More specifically, it considers adjusting the feed for hydrocarbon or hydrocarbon derivative synthesis. The present invention provides means for increasing the hydrogen-to-carbon monoxide ratio in said feed contributing to total performance of the overall process. In particular, said adjusting is applicable in biomass to liquid processes (BTL) or in converting biomass to hydrocarbons, alcohols or alkyl carbonates.

**Background**

Roughly the strategy applied is to subject carbonaceous biomass raw material to conditions converting it into gases. One of the most important gases is syngas, comprising carbon monoxide and hydrogen as most important components. Industrially, gases thus obtained can further be refined to hydrocarbons or other organic compounds of interest. The main reactions are known in the field. To optimize the yield and avoid irregularities in the production process, further steps are required.

One of said steps is increasing the hydrogen-to-carbon monoxide ratio in the feed of the synthesis reactor. A strategy for this is so called water gas shift (WGS) reaction recently reviewed e.g. by Ratnasamy, C. and Wagner, J. P. (2009) 'Water Gas Shift Catalysis', Catalysis Reviews, 51: 3, 325 - 440. In WGS, water and carbon monoxide react to form hydrogen and carbon dioxide.

When applying WGS process, in general, one can choose between or use combinations of four options: high temperature shift (HTS), medium temperature shift (MTS), low temperature shift (LTS) and sour gas shift. Each option has preferences considering the catalysts. The HTS reactor has a temperature range of 350-600 °C and the exit gas has a CO level of a few vol-%. In some applications, the CO level is further decreased with a LTS reactor after the HTS. Because the temperature range of the LTS is between 150-300 °C, an inter-stage cooler is needed. After the LTS reactor CO level can be even less than 1 vol-%.

Depending on the source of the syngas, the gas mixture may contain significant amounts of impurities influencing the WGS reaction. Also some side reactions produce unwanted compounds even from pure syngas. Considering the choice of a catalyst, sulfur compounds are relevant, because most of the WGS catalysts are known to have a very poor sulfur tolerance. There are two possible ways to deal with sulfur: it can be removed from the feed gas prior to WGS process or a sulfur tolerant WGS catalyst can be used. When sulfur tolerant catalyst is applied, WGS process is called sour gas shift.

For the sour gas shift reactions, it is difficult to find suitable catalysts that are both active and tolerate sulfur. A catalyst known to be suitable is a CoMo-catalyst within temperature range between 230-470 °C. These catalysts have a very good sulfur tolerance; in fact they require a sulfidation to work properly. Their activity in the WGS is however not as good as that of LTS catalysts in the sulfur-free feed gas. Their activity is very dependent on successful presulfiding. According to a Catalyst handbook (Twigg. M.V. (ed.), Catalyst Handbook, 2. ed., Wolfe Publishing Ltd, Frome 1989, 608 p. 306), catalysts typically applied for HTS, the FeCr catalysts, are also active in sulfided form, but their activity reduces to 50% of the original HTS activity.

One problem with sulfided catalysts is that proper functioning of the catalyst requires minimum sulfur level. With syngas of e.g. biomass origin sulfur contents may vary depending on the raw material batches. The sulfur content may even be too low for the sour gas shift catalyst requirements. In these cases, adding sulfur derivative to WGS reaction to provide sufficient sulfur level increases the burden to remove the same within subsequent reaction steps. Therefore, one aim of the present invention is to provide a WGS catalyst active in variable sulfur concentrations.

The water gas shift reaction disclosed in the prior art is typically designed for syngas originated from coal or natural gas. The composition, e.g. relations of the main components, impurities and traces differ depending on the origin of the raw material and have characteristics originating from the biomass used. Therefore, methods and strategies previously successful for the traditional raw materials are not readily applicable to biomass gasification and further refinement. Another aim of an embodiment of the present invention is to provide an alternative process suitable for producing hydrocarbons from biomass.

Furthermore, when applying the WGS reaction as disclosed in the literature the aim is to minimize the carbon monoxide and thus maximize its conversion e.g. when used as a part of ammonium production. As understood in the context of the present invention, carbon monoxide is valuable reactant for the following synthesis and loss of it is by no means desirable. Applying WGS prior to hydrocarbon or hydrocarbon derivative synthesis, differs from standard WGS applications as there is no need to maximize $H_2$/CO ratio but the required ratio is low compared to e.g. requirements of a hydrogen production unit. This means that catalyst activity and selectivity requirements are not as strict. The aim here is to provide a proper feed for hydrocarbon or hydrocarbon derivative synthesis by adjusting by optimal WGS reaction the hydrogen to carbon monoxide ratio to about at least 1.7.

US2009/246120 discloses a sour shift process using syngas which is produced by gasification, for example gasification of biomass. In the sour shift a $Fe_2O_3$-$Cr_2O_3$ catalyst is used.

**Summary of the invention**

The present inventors have surprisingly found that the process from biomass raw material to hydrocarbon or derivatives thereof can be implemented by performing a method in accordance with claim 1.

The FeCr catalyst presently used in the WGS step of this process has surprisingly shown to be efficient providing good conversion from carbon monoxide to carbon dioxide, and at the same time, tolerant for the impurities present in the feed. Especially, the tolerance for sulfur derivatives was unexpected in view of prior art. For the first time, long-term results with only moderate loss of activity and practically no detrimental sulfur accumulation were shown for a FeCr catalyst under a feed containing sulfur. Another interesting finding was that the presence of ammonium ($NH_3$) in the WGS feed increased the CO-conversion. Without being bound to a theory, it is assumed that the overall composition, especially the carbon dioxide content of 10-40 vol-%, in the feed obtained from biomass together with steam could contribute to the unexpected performance and endurance of the catalyst.

The application describes a method for producing hydrocarbons derivatives thereof comprising the steps of

- producing from biomass raw material a gas comprising carbon monoxide, hydrogen, 10-40 vol-% of carbon dioxide and at least one sulfur derivative as impurity;

- converting a part of said carbon monoxide in the presence of steam to carbon dioxide and hydrogen with a water gas shift reaction employing a FeCr - catalyst;

- converting in a synthesis reaction at least a part of the carbon monoxide and hydrogen contained in the gas into a product selected from hydrocarbon composition or an organic derivative thereof; and

- recovering the product.

**Brief description of the figures**

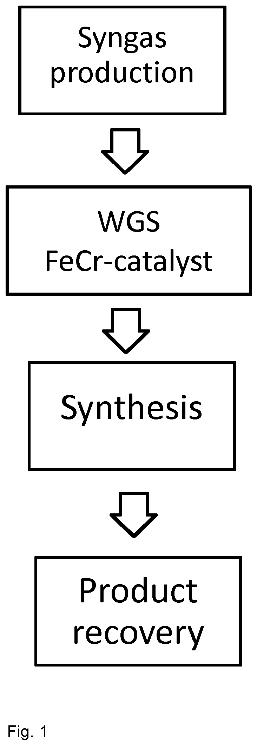

Figure 1 discloses a schematic presentation of the process steps of one embodiment of the present invention.

**Detailed description of the invention**

Here is provided a method for adjusting hydrogen to carbon monoxide ratio in syngas, comprising the steps of

- providing a syngas from biomass raw material, said syngas comprising carbon monoxide, hydrogen, 10-40 vol-% of the dry gas of carbon dioxide, and at least one sulfur derivative as impurity;

- converting a part of said carbon monoxide in the presence of steam to carbon dioxide and hydrogen with a water gas shift reaction employing a FeCr - catalyst.

In the first step, a gas comprising carbon monoxide, hydrogen, 10-40 vol-% of the dry gas of carbon dioxide and sulfur derivatives is provided. Preferably the gas mixture is rich in hydrogen and carbon monoxide, so it can be called syngas (synthesis gas). One preferred way of providing a syngas from biomass raw material is gasification of biomass raw material, because it provides a gaseous mixture of the gases mentioned comprising carbon dioxide 10-40 vol-% of the dry gas. Other means for providing said syngas from biomass raw material comprise e.g. refining exhaust gases from waste treatment, recovered gases from landfills, fermentation processes etc..

As a specific embodiment, here is thus provided a method for producing $C_4$-$C_{90}$ hydrocarbons from biomass raw material, comprising the steps of, gasifying said biomass raw material to produce a gas comprising carbon monoxide, hydrogen, 10-40 vol-% of carbon dioxide and sulfur derivatives; converting a part of said carbon monoxide in the presence of steam to carbon dioxide and hydrogen with a WGS reaction employing a FeCr -catalyst; converting in a FT-reactor at least a part of the carbon monoxide and hydrogen contained in the gas into $C_4$-$C_{90}$ hydrocarbons; and recovering the $C_4$-$C_{90}$ hydrocarbons.

This embodiment was of special interest for the present inventors, but the results obtained showed to be generalizable to other embodiments as well.

Hence, the present description discloses as an embodiment, a novel process for producing hydrocarbons or derivatives thereof from a biomass raw material. In this context, biomass is understood to encompass any biological material from living, or recently living organisms of plant, animal or microbial origin. Forest residues, such as dead trees, branches and tree stumps, yard clippings, wood chips and garbage are usable in biomass to liquid processes (BTL). Carbon-rich waste from industrial processes, such as pulp and paper production, oil pressing or other food industry can be used as well. In general, when using biomass as raw material, there must be some flexibility and adaptability built in and designed in the production facilities, lines and processes. The raw material, even though generally classifiable as biomass, can vary within even the same gasification unit depending on the availability of different materials. As biology is involved, natural causes for variability include geography, soil, seasons, yields, etc. Also politics and markets define accessibility and affordability of the biomass resources for these purposes. As a consequence, even when using only biomass as raw material, it can be heterogeneous by bulk, humidity, carbon content, impurity and other factors effecting the present process.

The composition of the product gas depends on the biomass raw material resource. Wood, bark, cereals, straw, bagasse, etc. are all possible raw materials for biofuel production. For ethical reasons, non-food raw materials are preferred. Woody biomass is composed of hemicellulose, cellulose, lignin and some organic compounds and minerals. In biomass the carbon content level is around 50 wt%, hydrogen 6 wt% and oxygen 42 wt%. These levels are typical for all types of woody biomass. In Table 1 few examples are presented.

*Table 1. CHO-contents dependent on the biomass raw material sources.*

|           | Willow branches | Pine  | Forest residue | Saw dust |
| --------- | --------------- | ----- | -------------- | -------- |
| C (wt%)   | 45,5            | 51,74 | 50,8           | 51,02    |
| H (wt%)   | 6,1             | 6,09  | 6,0            | 6,00     |
| O (wt%)   | 44,0            | 41,81 | 39,4           | 42,50    |

The relevant components of syngas or synthesis gas are carbon monoxide and hydrogen, but it is evident that it contains other gases as well. The quantities of other substances are strongly influenced by several factors like the original habitat and the type of the biomass. These substances include N, Si, Ca, Mg, K, Na, P, S, Cl, F, Al, Fe, Mn, Cu, Zn, Co, Ni, Cr, Hg, Pb, Cd, V and tars. Tar is here understood as a mixture of (poly)cyclic aromatic hydrocarbons and some oxygen-containing hydrocarbons. In the biomass gasification process, most of the inorganic matter forms solid particles (ash), which can be separated from syngas by filtering. However, inorganic compounds can also form gaseous substances which are more difficult to separate and can influence the WGS reaction, e.g. sulfur content, typically present as $H_2S$, is ca. 50-250 ppm in the gas when forest residue is used as a feedstock to gasifier.

Typically, gasifying the biomass raw material for producing a syngas takes place in the presence of oxygen. For fuel production by the FT process, it is preferred to use an oxygen-containing gas for the gasification in order to attain reasonably high temperatures and to reduce the formation of nitrogenous by-products. Examples of suitable gases are air and oxygen gas. Gasification can be promoted by feeding steam, air or oxygen into the reactor, particularly advantageous results being obtained with oxygen and oxygen in combination with steam.

The biomass is generally gasified in a fluidized bed reactor or a circulating fluidized bed reactor (CFB) gasifier in the presence of oxygen at a temperature in the range of about 700 to 1400 °C. Preferably, gasifying the raw material in the presence of oxygen is performed at a temperature of at least 1000 °C. At these conditions, biomass, such as lignocellulosic materials, will produce a gas containing carbon monoxide and hydrogen, thus the components of syngas, as well as carbon dioxide and water gas. Further it usually contains some hydrocarbons and impurities, such as sulphur and nitrogen derivatives and trace metals and derivatives thereof.

In the gasification reactor, the circulating bed is formed by a granular or particulate bed material, such as sand and/or a similar inorganic material. CaO, which can be obtained by introducing Ca carbonate into the gasification reactor, is used as a catalyst for the decomposition of tars in the gasification. The biomass can be in the form of particles, granules or chips or similar coarse or finely divided parts. According to one embodiment, the biomass can be used roughly as such as harvested. According to another embodiment, the biomass is milled or grinded to an average particle or granule size of less than about 50 mm, preferably less than about 40 mm, in particular about 25 to not more than 1 mm before gasification. The biomass can also be fed into the gasifier in the form of a liquid stream, e.g. a liquid stream obtained by pyrolysis of biomass.

In the case of solid biomass, it is typically fed into the reactor with a moisture content of less than 30 % by weight, preferably less than 25 % by weight, for example about 5 to 20 % by weight.

Depending on the temperature, the qualities of the biomass, and the concentration of oxygen, the "carbon conversion", i.e. conversion of elemental carbon contained in the raw material into light compounds, hydrocarbons, derivatives thereof and tar, is higher than 70 %, preferably higher than 75 %, in particular in excess of 80 % by weight of the carbon in the raw material.

The overall process can further be improved by adding a step wherein at least some of aromatic compounds contained in the gas obtained by gasification of the raw material are removed before further processing carbon monoxide and hydrogen into desired $C_4$-$C_{90}$ hydrocarbons or derivatives thereof. Especially the aromatic compounds removed comprise at least one, preferably two compound(s) selected from benzene, toluene and naphtalene. Benzene removal is desirable, as it is a damaging to both occupational health and environment. Benzene and specially naphtalene are known to clog the process equipment at low process temperatures.

The exhaust from gasification is not optimal feed for synthesis reactors. The hydrogen to carbon monoxide ratio is low, typically from 0.5 to 1.0 after gasification and optional reformation, and therefore must be increased. Adjusting hydrogen to carbon monoxide ratio aims at raising said ratio to a value of at least 1.5, preferably at least 1.7. Optimal value for methanol synthesis is about 2 (Roberts et al. fig 7, http://www.fischer-tropsch.org/DOE/ conf proc/USDOE-COALLIQ&GAS/96001664/de96001664 rpt23.pdf) for other alcohol syntheses at highest 2 and for FT reaction from 1.7 to about 2. However, a considerably higher value produced during WGS reaction may be optimal depending on the overall process. As only a part of the carbon monoxide is converted in WGS reaction according to invention, a man skilled in the art knows how to design the process to provide the desired ratio. It is preferred to bypass a part of the feed gas without subjecting it to WGS reaction, thereafter combining said reacted and bypassed portions in optimal proportions to obtain desired hydrogen to carbon monoxide ratio. Calculating said parts and portions requires basic skills of an artesan.

As a specific embodiment, the FT reaction requires to provide desired effect, that the reactants are present in a molar ratio of at least 1.7, preferably of about 2. The optimal ratio is based on reaction stoichiometry, wherein ratio of 2 results in most efficient consumption of the starting materials. This applies especially when cobalt catalyst is employed. However, iron catalyst is usable as well, wherein the ratio of 1.8 is preferred due to side reactions affecting the overall balance.

In the process of the present invention, said increase of hydrogen to carbon monoxide ratio is achieved by subjecting the gas to a water gas shift reaction, in which hydrogen is produced by reacting carbon monoxide in the presence of steam to produce carbon dioxide and hydrogen. Surprisingly, in said conversion of water and carbon monoxide to carbon dioxide and hydrogen, very good results were obtained using a FeCr catalyst with biomass based syngas. Steam in the feed is beneficial to the catalyst, as it protects it from over-reduction. However, exaggerated excess of steam adversely effects the equilibrium reactions, as $H_2$/CO ratio unnecessarily increases. A skilled person can calculate the amount of steam in the feed taking factors (temperature, flow rate, etc.) influencing the reaction rate into account.

Even though prior art teaches to use sulfided catalyst with a feed containing sulphur, the experiments demonstrated that sulfidation pretreatment is not necessary or even beneficial with the feed composition obtained from biomass gasification. With sulfur content in the gas is here meant the total amount of sulfur derivatives calculated as elemental sulfur. In the method of invention, sulfur content in said gas entering WGS is from 30 ppm to 500 ppm, most preferably from 50 to 250 ppm. Other impurities present in the gas fed to WGS reactor are approximately: $NH_3$ 50-10000 ppm, HCN 5-10% of the amount of $NH_3$, $CO_2$ from 10 to 40 vol-%, HCl from 20 to 200 ppm and aromatic compounds from 1000 to 4000 mass-ppm, wherein benzene from 200 to1000 ppm and naphtalene from 20 to 100 ppm. Throughout the present description, all measures given as ppm refer to mass-ppm.

With a FeCr catalyst is here referred to a catalyst containing $Fe_2O_3$ and $Cr_2O_3$. The FeCr catalysts known in the art contain about 80-90% (wt) of $Fe_2O_3$, 8-10% $Cr_2O_3$, the balance being promoters and stabilizers like copper oxide, $Al_2O_3$, alkali, MgO, ZnO, etc. The BET surface areas of these catalysts vary between 30-100m²/g depending on the $Cr_2O_3$ and $Al_2O_3$ contents and calcination temperatures (Ratnasamy and Wagner, p. 334, last paragraph). One of the major functions of $Cr_2O_3$ and $Al_2O_3$ is to prevent the sintering, and, consequent loss of surface area of the iron oxide crystallites during the start-up and further operation. Pure $Fe_2O_3$, when used as a HTS catalyst, deactivates fast due to sintering of the iron oxide crystallites. In addition to being a textural promoter preventing the sintering of iron oxide crystallites, $Cr_2O_3$ also functions as a structural promoter to enhance the intrinsic catalytic activity of $Fe_2O_3$. As supplied, the $Fe_2O_3$- $Cr_2O_3$ catalyst is a solid solution of a $Fe_2O_3$ and $Cr_2O_3$, wherein the $Cr^{3+}$ ion substitutes, isomorphously and partially, the $Fe^{3+}$ ions in the a $Fe_2O_3$ lattice framework. Even though most of the chromium ions in the fresh catalyst are present in the $Cr^{3+}$ state, a small fraction, especially on the surface, is present in the hexavalent state, as $CrO_3$. During start-up in the industrial reactor, $Fe_2O_3$ is reduced to $Fe_3O_4$ in syngas at 300-450 °C.

The $Fe_2O_3$-$Cr_2O_3$ catalyst is not extremely sensitive to the presence of sulfur and can tolerate the presence of substantial amounts of sulfur due to the facile reversibility of the sulfidation reaction (Ratnasamy and Wagner, p. 336, eq. 20). The $Fe_2O_3$-$Cr_2O_3$ catalysts can tolerate sulfur up to, about, even 1000 ppm. The $Fe_2O_3$-$Cr_2O_3$ catalyst is sulfided during use and, in the sulfided state its activity is much lower than in the oxide state (Ratnasamy and Wagner, page 362). The rate of the HTS reaction is limited by pore diffusion and linearly dependent on the steam partial pressures under industrial conditions (Ratnasamy and Wagner p. 337). While maintaining sufficiently high $H_2O$/$H_2$ ratios is important, passing steam, in the absence of reductants like $H_2$ and CO, over the reduced ironoxide - chromium oxide catalyst, can reoxidize the $Fe_3O_4$ to $Fe_2O_3$ (Ratnasamy and Wagner Eq. 19) and thereby lower catalytic activity.

The experiments conducted with WGS here, showed that best carbon monoxide conversion was obtained when the water gas shift reaction was conducted at a temperature of between 380 °C and 430 °C to provide sufficient catalyst function and consequent CO-conversion. In review article (Ratnasamy, C. and Wagner, J. P. (2009) 'Water Gas Shift Catalysis', Catalysis Reviews, 51: 3, p. 340, l. 1-3), value 510 °C was mentioned as the maximum operating temperature. With fresh catalyst is here referred to a catalyst which has not been sulfided prior to introduction into the WGS reactor construction.

In literature, the activity of a FeCr catalyst has decreased even to half of the original when $H_2S$ has been added to feed. However, the effect of $H_2S$ has only been investigated at atmospheric pressure and for significantly higher feed rates with feed composition simulating coal-derived syngas. Our experiments suggest that the deactivating effect of $H_2S$ decreases at higher pressures. This is probably due to that either metal sulfide formation is inhibited or metal sulfide reoxidation is promoted due to higher partial pressure of other components in the gas. Consequently, the feed composition, GHSV and reactor pressure influence how large the deactivating effect of $H_2S$ is.

The pressure of the WGS reaction is generally from 1 to 10 bar. In experiments conducted to demonstrate the present invention pressure showed to have effect in the WGS. The harmful effect of sulfur decreasing the carbon monoxide conversion was almost eliminated in the conditions of the invention and pressure of 5 bar. Hence, preferably the WGS reaction within the present invention is conducted in a pressure from 3 to 6 bar.

The space velocity, GHSV is preferably in the range of about 3,000 to 5,000 h$^{-1}$, although a broader range of about 1,000 to 10,000 h$^{-1}$ is possible.

After the WGS reaction, and optional washes, the gas is fed to a synthesis reactor. The synthesis can here refer to hydrocarbon synthesis, alcohol, such as butanol, synthesis or alkyl carbonate synthesis. These are known in the art, but as a preferred example, hydrocarbon synthesis employing Fisher-Tropsch is now disclosed in detail. An artisan understands that the present method for adjusting of hydrogen to carbon monoxide ratio can equally be applied to other synthesis reactions as well.

According to an embodiment concerned with the FT-synthesis, in the FT -reactor at least a part of the carbon monoxide and hydrogen contained in the gas is converted into a hydrocarbon composition comprising $C_4$-$C_{90}$ hydrocarbons, in other words, hydrocarbons having carbon numbers in the range of from 4 (included) to 90 (included). The products obtained in the Fischer-Tropsch reaction, said $C_4$-$C_{90}$ hydrocarbons, include distillates and hydroconverted products, e.g. fuels such as naphtha, kero and diesel, base oils and n-paraffins, light detergent feedstocks and wax.

The Fischer-Tropsch synthesis is preferably carried out at a temperature in the range from 125 to 350 °C, preferably from 200 to 260 °C. The pressure preferably ranges from 5 to 150 bar, more preferably from 5 to 80 bar absolute. In the Fischer-Tropsch synthesis especially more than 65 wt% of $C_4$-$C_{90}$ hydrocarbons, preferably more than 85 wt% $C_4$-$C_{90}$ hydrocarbons are formed. Depending on the catalyst and the conversion conditions, the amount of heavy wax $C_{20}$-$C_{90}$ hydrocarbons may be up to 60 wt%, sometimes up to 70 wt%, and sometimes even up till 85 wt%.

Catalysts for use in the Fischer Tropsch reaction typically comprise a metal from Group VIII of the Periodic Table of Elements. Particular catalytically active metals include ruthenium, iron, cobalt and nickel, of which cobalt is preferred. To have large active metal surface the Fischer-Tropsch catalytically active metal is supported on a porous carrier which typically is a refractory metal oxide or silicate or a combination thereof. Examples of preferred porous carriers include silica, alumina, titania, zirconia, ceria, gallia.

The Fischer-Tropsch catalytically active metal may be present in the catalyst together with one or more metal promoters or co-catalysts. Depending upon the particular promoter concerned, it can be present as a metal or as a metal oxide. Typical metal promoters include rhenium, platinum and palladium. Examples of metal oxides comprise titanium, zirconium, manganese and/or vanadium derivatives.

Thus, as an example, a Fischer-Tropsch catalyst may comprise cobalt as the catalytically active metal and zirconium as a promoter or cobalt as the catalytically active metal and manganese and/or vanadium as a promoter, wherein the cobalt: (manganese + vanadium) atomic ratio is advantageously at least 12:1.

The composed Fischer-Tropsch catalyst is typically subjected to calcination to remove crystal water, to decompose volatile decomposition products and to convert organic and inorganic compounds to their respective oxides. After calcination, the resulting catalyst may be activated by contacting the catalyst with hydrogen or a hydrogen- containing gas, typically at temperatures of about 200 to 350 °C.

The Fischer-Tropsch synthesis may be carried out in a slurry phase regime or an ebullating bed regime, wherein the catalyst particles are kept in suspension by an upward superficial gas and/or liquid velocity. Optionally, a fixed bed Fischer-Tropsch process is used, such as a multi-tubular fixed bed.

The steam to gas ratio can also affect the production of hydrocarbons (mainly methane) by the Fischer-Tropsch reaction. To minimize such undesirable reactions, a minimum steam to gas ratio of 0.4 is ensured in the WGS.

A man skilled in the art is aware of wash steps contributing to the overall performance of the process according to claim 1. Hence, according to another embodiment, said process further comprises at least one wash step. Said washing steps could be selected from sulfate washes, alcohol washes, water washes, pyridine washes etc.. In the field, it is known to apply e.g. methanol wash step prior to reactions wherein water free conditions are required.

Examples of other washes known in the art are disclosed e.g. in DE102007051181. The method involves selectively scrubbing materials of respective types by raw gas that is guided in a reverse flow to a physical acting detergent in two steps. A methanol stream is produced via a pipeline by separation of one type of material. Another methanol stream is produced from a portion of the detergent that is free from the other type of material and loaded with the materia, in one of steps, by separation of the material. The methanol stream is re-guided as the detergent in one of scrubbing steps.

Publication DE19610846 A1, provides an example of a process for removing hydrogen cyanide by a wash. It comprises physical scrubbing of the gas to remove $H_2S$ and the other acidic components using a scrubbing agent, which is regenerated and reused in the process with simultaneously scrubbing out hydrogen cyanide with $H_2S$ and the acidic components. Then $SO_2$ is added followed by $NH_3$ and/or alkali to the scrubbing agent.

To clean the synthesis gas from metal carbonyls, a number of techniques have been developed. An artesan is familiar to a so called Rectisol method, disclosed in patent publication DE 26 10 892, wherein, the crude gas is initially subjected to a HCN removal using a small portion of a regenerated methanol as scrubbing liquid, in a prescrubbing step. Then the crude gas is scrubbed with the main quantity of the regenerated methanol to absorb $H_2S$ therefrom. Both the prescrubbing methanol and the main scrubbing methanol are charged with substances absorbed from the gas and contain the metal carbonyl. Methanol is utilized at a temperature of -60 C to 0 C. Then methanol is subjected to expansion, evacuation, thermal treatment for outgasing and then a further heating step with any additional treatment in a reactor prior to recycling. With this process, the formation of deposits of heavy metal compounds, especially metal sulfides formed from the metal carbonyls, is prevented in the outgasing column of gas scrubbers and the operating life of such equipment is increased.

Another method for the removal of metal carbonyl compounds is known from patent application DE 43 36 790. In this process, before being admitted to a regenerating column, a highly loaded and a poorly loaded scrubbing liquid stream are heated and each is fed to a reactor. The highly loaded stream of the scrubbing liquid, together with the condensate which is produced by the partial condensation of the vapor from the condensation system of the regenerating column is fed to a reactor providing a sufficient residence time.

Another document disclosing methanol washes is US 2005035326. A methanol/water scrubbing solution containing colloidal metal sulfides formed from metal carbonyls and resulting from the scrubbing of synthesis gas, is subjected to agglomeration of the metal sulfides before the scrubbing solution to be separated enters the separating column. The agglomeration is carried out in a precipitation vessel and the scrubbing liquid is diluted before it enters the precipitation vessel.

Optionally, the method of the invention can further comprise a step wherein carbon dioxide is withdrawn from the gas downstream any gas washing process arranged before the Fischer-Tropsch reactor. To a man skilled in the art, suitable means for separating carbon dioxide from the gas include membrane filtration, pressure swing absorption and washing with a liquid capable of absorbing carbon dioxide .

The hydrocarbons recovered from the overall process after FT reaction and optionally further process steps comprise mainly linear hydrocarbons having from 4 to 90 carbon atoms, referred here as $C_4$-$C_{90}$ hydrocarbons. Some branched hydrocarbons can be present in the product, but majority of the product hydrocarbons are linear. Primarily the hydrocarbons are saturated (alkanes) although unsaturated compounds can be included in minor amount of less than 10 mol-%, in particular less than about 5 mol-%. Depending on the catalyst used, some oxygenated hydrocarbons can be formed as impurities in the FT reaction.

The hydrocarbons recovered from the process of the invention can preferably be further treated to produce a fuel or lubricant for combustion engines. One embodiment is to produce hydrocarbons suitable for fuel applications having distillation cut points in the range of about 40 to 350 °C, in particular 180 to 300 °C. The carbon numbers of such compositions are in the range of 10 to 25. The fuel may be, for example, LPG (liquefied petroleum gas), gasoline, diesel or any jet fuel.

In case of waxes and similar hydrocarbons which are solid or semi-solid at ambient temperature and, generally, and also in case of any high-molecular weight hydrocarbons, the hydrocarbon composition obtained from FT-synthesis is preferably further processed by hydrogenation with hydrogen gas at an increased temperature in the presence of a catalyst in order to produce a hydrocarbon composition suitable as a diesel class hydrocarbon or as composition from which such a hydrocarbon can be produced. Typically, hydrogenation with hydrogen gas is performed at a temperature of about 220-270 °C in a fixed bed reactor. The catalyst is typically a supported or unsupported metal catalyst, e.g. nickel on carbon.

After the hydrogenation, preferably, an isomerization step is performed to produce paraffinic hydrocarbons and similar composition for use as fuels.

According to another embodiment, the present process is employed to produce hydrocarbons suitable for lubricant applications, said compositions having carbon numbers in the range of 30 to 40.

A man skilled in the art understand that the gist of the invention, adjusting the hydrogen to carbon monoxide ratio is applicable to many alternative processes upstream and downstream from WGS. However, the present inventors have provided as an example, one specific embodiment of the process of the invention where the syngas from biomass produced by gasification at a temperature of about 750 - 950 °C. Then the product of the gasification still contains some unreacted hydrocarbons. In order to convert all hydrocarbons to syngas components, the effluent of a gasifier is fed into a reformer, either a thermal reformer or catalytic reformer, wherein the gas is subjected to further thermal reactions which give a syngas product mix containing less by-products.

After reforming step, the composition of the gas comprises for example from 10 to 40 vol-% $CO_2$, from 0.5 to 6 vol-% $CH_4$, from 20 to 40 vol-% $H_2$, 10 to 30 vol-% CO, 100 to 400 ppm $H_2S$ and minor amounts of other impurities. It is the subjected to WGS.

Accordingly, said process further comprises a step of reforming the gas obtained by gasification of the biomass raw material before said water gas shift reaction. More specifically, the overall process is then performed following the steps:

i) gasifying the raw material in the presence of oxygen to produce a gas comprising carbon monoxide, carbon dioxide 10-40 vol-% of the dry gas, hydrogen, hydrocarbons and at least sulfur derivative;

ii) feeding the gas obtained by gasification of the raw material into a reformer;

iii) reforming the gas in the presence of oxygen in order to increase the ratio of hydrogen to carbon monoxide in a gaseous effluent of the reformer to a value in the range of 0.5 to 1.5;

iv) withdrawing the gaseous effluent from an outlet of the reformer;

v) converting said effluent with a water gas shift reaction employing a FeCr - catalyst, wherein at least a part of said carbon monoxide reacts to carbon dioxide and hydrogen;

vi) feeding the gas to a Fisher-Tropsch reactor;

vii) converting in the Fisher-Tropsch -reactor at least a part of the carbon monoxide and hydrogen contained in the gas into a hydrocarbon composition comprising $C_4$-$C_{90}$ hydrocarbons; and

viii) recovering the hydrocarbons.

Preferably gasification i) is carried out at a first temperature and reforming iii) at a second temperature, said second temperature being essentially higher than the first temperature. According to this embodiment, said reforming is carried out in catalyst bed reformer at a temperature in excess 600 °C, preferably maximum temperature inside reformer is about 900 - 1200 °C. Most preferably the reforming is conducted as a two-step (two-reacotr) procedure, wherein different temperatures are applied and a peak temperature of 1200 °C is employed in the second reactor.

**Examples**

*Example 1. A FeCr catalyst: Immediate effect of impurities on CO conversion.*

Reactor set-up

The WGS reaction experiments were carried out at a micro reactor using simplified model gas composition. The reactor system consisted of two consecutive packed bed reactors (ø 2 cm) with heated gas and water feed lines and online product gas analyzers. Gases were fed from gas bottles except hydrogen from a hydrogen compressor line. Water was fed from air-pressurized heated tank (80 °C) using a pneumatic pump. Water tank was placed on a balance to monitor the water feed. After the reactor the gas was led through a cold trap (to condense water at 5 °C) and a gas bell to venting.

Catalyst packing

First reactor, reactor 1, was packed with inert silicon carbide (SiC) and used as a pre-heater to ensure that feed gases are fully heated before entering the second reactor, reactor 2. The FeCr catalyst was ground and sieved to a particle size of 0.15-0.355 mm. Reactor 2 was packed with 4 g of catalyst diluted with SiC using a volume ratio 1:1. Four thermocouples were inserted into the thermocouple pocket.

Test conditions

No special catalyst pretreatment was applied. Reactor 1 was heated to 400 °C and reactor 2 to 300 °C in $N_2$ and pressure adjusted to 5 bar before the feed gas mixture was introduced to the reactor and Reactor 2 temperature set to 400 °C. Pressure in all impurity experiments was 5 bar and temperature 400 °C. Total feed flow was 12 l/h, corresponding to GHSV of 3000 h-1. The basic feed composition is shown in Table 2.

*Table 2. Basic feed composition.*

| GHSV | Total flow | $H_2O$ | CO | $CO_2$ | $H_2$ | $N_2$ | $CH_4$ |
|---|---|---|---|---|---|---|---|
| 1/h | Nl/h | vol.% | vol.% | vol.% | vol.% | vol.% | vol.% |
| 3000 | 12.0 | 36 | 12 | 22 | 24 | 5 | 1 |

The impurity components were purchased from AGA as dilute hydrogen mixture gases $H_2S/H_2$, $COS/H_2$ and $NH_3/H_2$. Their feed concentrations were varied in the experiment (see Table 3), so that $H_2S$ feed was 0 ppm, 100 ppm or 500 ppm (from total feed in ppmv), COS feed 0 ppm or 85 ppm and $NH_3$ feed 0 ppm or 800 ppm. Pure $H_2$ feed was balanced to obtain the correct total hydrogen feed.

*Table 3. Sequence of feed impurity additions Each condition was kept for several days.*

| Impurities ($ppm_v$) |
|---|
| - |
| 100 ppm $H_2S$ |
| 500 ppm $H_2S$ |
| 100 ppm $H_2S$ |
| 100 ppm $H_2S$ + 85 ppm COS |
| 100 ppm $H_2S$ |
| 100 ppm $H_2S$ + 800 ppm $NH_3$ |
| 100 ppm $H_2S$ |
| 100 ppm $H_2S$ + 85 ppm COS + 800 ppm $NH_3$ |
| 100 ppm $H_2S$ |
| - |
| 500 ppm $H_2S$ |
| 500 ppm $H_2S$ + 85 ppm COS + 800 ppm $NH_3$ |
| 100 ppm $H_2S$ + 85 ppm COS + 800 ppm $NH_3$ |
| shut-down |

Product analyses

The product gas was analyzed online using a Fourier transform infrared analyzer and a gas chromatograph (HP 5890) with FID and TCD (flame-ionization and thermal conductivity) detectors. GC analysis was from dry gas (i.e. gas after the 5 °C cold trap), whereas FTIR analysis was from wet gas (before the cold trap). Three or four GC injections were made and results calculated as average. FTIR spectra were recorded for minimum of one hour using cycles of 20 s measurement + 5 min waiting. FTIR results were also calculated as average. When sulfur components and/or ammonia were present in the feed, some water samples from the cold trap were analyzed for $H_2S$ and $NH_3$ concentrations.

Result calculation

CO conversions were calculated based on GC results. Since water is removed before the GC analysis, GC result is for dry portion of the product gas. Portion of dry gas from total gas amount changes during reaction as hydrogen production consumes water. CO concentrations from dry product gas were converted to concentrations from total product gas according to equation:

$$CO_{tot}=CO_{dry}/(12/(7.7+((H_2O_{in}/0.8)-(H_2O_{out}/0.8)))) \qquad (2)$$

wherein

12 is the total feed/product flow (l/h)

7.7 is the dry feed flow (l/h)

0.8 is mass of one liter of steam (g).

$H_2O_{in}$ and $H_2O_{out}$ were determined from feed tank and 5 °C cold trap product weights. FTIR results were too instable to be used in these calculations.

RESULTS

CO-conversion

The effect of different impurity components in the feed were assessed comparing CO conversions. Each condition was kept at least for several days and conversions calculated as an average based on GC results as shown above. Equilibrium CO conversion in test conditions (temperature and feed composition) would be about 75 % (i.e. theoretical maximum).

The CO conversion with no impurities in the feed was 56 %. When 100 ppm $H_2S$ was added to the feed, the conversion decreased slightly to 55 % but when $H_2S$ feed was increased to 500 ppm, the conversion decreased further to 51 %. When $H_2S$ feed was restored to 100 ppm, conversion returned upwards to 53 %. However, water feed was too low at this point (more discussion below). Water feed was restored to original level and after this, a combination of 100 ppm $H_2S$ and 85 ppm COS in the feed led to a conversion of 55 %. At this point, the baseline of GC indicated some fouling in the GC column and it was purified by baking.

After baking, a feed with 100 ppm $H_2S$ led to conversion of 57 %. Combination of 100 ppm $H_2S$ and 800 ppm $NH_3$ in the feed led to a conversion of 60 %. After this, $NH_3$ was removed from feed but conversion stayed at 61 %. Then feed was changed to 500 ppm $H_2S$, 85 ppm COS and 800 ppm $NH_3$ and this led to conversion of 56 %. Finally, a combination of 100 ppm $H_2S$, 85 ppm COS and 800 ppm $NH_3$ in the feed led to conversion of 61 %.

There was some fluctuation in the water feed during the test run. Over time, water feed from the pump decreased slightly, which was compensated by increasing the pump setting. On average, the water feed was 3.1-3.8 g/h except during one 100 ppm $H_2S$ test point feed was only 2.5 g/h (Fig. 1, 4th column). The equilibrium conversion of CO changes as the water feed changes. Aspen simulations showed that a water-to-carbon monoxide feed ratio decrease from 3 to 2 (corresponds to water feed decrease from 3.5 g/h to 2.5 g/h) could result in conversion decrease of about 6 percentage units. If water feed decrease is smaller, the effect on conversion is also smaller. Based on this, it could be estimated that conversion error margin in this study is about $\pm$ 2-3 %-units. Consequently, the results indicate that at 100 ppm level of $H_2S$, the effect on CO conversion is negligible. The effect of 500 ppm $H_2S$ was five times higher compared to 100 ppm and it is above error margin. 85 ppm COS had no clear effect on CO conversion and 800 ppm $NH_3$ even seemed to increase conversion slightly. Negative effect of 500 ppm $H_2S$ as well as positive effect of 800 ppm $NH_3$ remained for several days even after the feed was changed back to normal.

When sulfur components and/or ammonia were present in the feed, some water samples from the +5 °C cold trap were analyzed for $H_2S$ and $NH_3$ concentrations. In all samples $H_2S$ content was $\leq$1 ppm. With 800 ppm $NH_3$ in the feed, $NH_3$ contents in the water were around 400-700 ppm (there were fluctuations in the ammonia feed, see 3.3). With 100 ppm $H_2S$ + 800 ppm $NH_3$ in the feed, the pH of cold trap water was 6.7. With only 100 ppm $H_2S$ in the feed, the pH was 5.0. The pH of pure ion-exchanged water was 5.6.

Hence, contrarily to effect suggested in the literature, practically no immediate decrease on the CO conversion was observed with sulfur content on 100 ppm and very modest with 500 ppm. If using gas feed without sulfur in it as a reference, even with said higher sulfur content, over 85 % of the conversion obtainable with the reference can be maintained. With 100 ppm, respective conversion is over 95% of the reference. It can be concluded that a FeCr-catalyst is suitable for WGS reaction in the conditions of the present method.

In practice, this also means, that short term fluctuation in the sulfur content in the feed has a negligible immediate effect on the conversion. This is especially beneficial in comparison to catalysts requiring pre-sulfidation prior to WGS reaction. When using biomass as raw material, the sulfur content in syngas thereof produced can vary depending on the origin and biology as explained on page 4 of this description. Surprisingly, presence on ammonium in $NH_3$ the feed gas as impurity, seems to increase the conversion.

*Example 2. CO conversion; effect of temperature and pressure on the conversion.*

Materials and methods

The effect of temperature and pressure on the CO conversion was studied in laboratory equipment. In experiments, 50 ml of the catalyst was packed into a tubular gas reactor, wherein no additional filling materials were used in packing. A thermocouple was situated in the middle of the catalyst bed. The reactor was placed inside of an oven. The line for evaporated water and the line from the bypass line of the reactor to the FTIR analyzer and the condenser were heated.

In the WGS process the reactor was first purged with $N_2$ (AGA, 99.999 %) flow of 1 $dm^3$/min for 10 minutes. Reactor was left in nitrogen atmosphere. The reactor was heated to 300 or 400 °C with heating range of 20 °C /min. The flow rates of reactants CO (Linde, 99.97 %), $CO_2$ (AGA, 99.99 %), $H_2$ (AGA, 99.999 %) and $CH_4$ (Linde, 99.95 %) were set to be 0.24, 0.47, 0.46 and 0.03 respectively. $H_2S$ was fed using $N_2$ as carrier, $H_2S/N_2$ (AGA, 0.5 vol-%). The ion exchanged water was fed to the evaporator of 400 C. The flow rate of generated water vapor was 0.7 $dm^3$/min. The total gas flow was kept constant at 2 $dm^3$/min (NTP).

The composition of the feed gas mixture was first analyzed by the FTIR and the gas analyzer. Next the gas mixture was fed into the reactor. The changes in the catalyst activity were monitored by the gas analyzer and the FTIR. Once the reaction had reached the steady state, the total flow rate of the dry gas was measured by gas meter. If additional reaction conditions were tested, temperature and pressure were usually changed with constant feed gas flow in the reactor. It was also possible to feed the gas mixture to the bypass line of the reactor for the time the conditions were changed. Results were compiled to table 4.

*Table 4. Effect of temperature and pressure on the CO conversion.*

| Temperature [°C] | 300 | 400 | 400 | 400 | 400 |
|---|---|---|---|---|---|
| Pressure [bar] | 1 | 1 | 5 | 1 | 5 |
| $H_2S$ [ppm] | 100 | 100 | 100 | 370 | 370 |
| CO conversion [% of the theoretical maximum] | 7 | 65 | 75 | 60 | 70 |

From these results, it can be concluded, that optimal temperature for WGS reaction with gas originated from biomass gasification is about 400 °C. Further, these results show that increasing pressure eliminates the adverse effect caused by sulfur derivatives, especially, $H_2S$.

*Example 3. A FeCr catalyst:Long term effect of impurities on the catalyst itself.*

Materials and methods

Spent catalyst was analyzed for carbon and sulfur impurities using SEM-EDS (scanning electron microscopy with semiquantitative elemental mapping) and TPO (temperature programmed oxidation). Observations by eye and photographs were recorded as well.

HTS catalysts, such as FeCr, have typically quite long life time. Usually the loss of activity is caused by slow thermal sintering. Sintering means that $Fe_3O_4$ crystals agglomerate together and this causes decrease of surface area which further causes loss of catalytic activity. Chromium oxide in the catalyst acts as a stabilizer and slows down sintering.

Catalyst reduction

In some reductive conditions, the FeCr catalyst can undergo an over-reduction which causes the reduction of iron oxides to metallic iron. In metallic form iron is no longer catalytically active in water gas shift reaction; on the contrary, it catalyzes side reactions such as Fischer-Tropsch and methane formation (Ratnasamy and Wagner, p. 338, second paragraph). For this reason, FeCr over-reduction should be avoided. The fresh and used catalysts were evaluated by eye.

RESULTS

Spent catalyst analyses

Elemental analyses of spent catalyst samples are shown in Table 5.

*Table 5. Quantitative and semiquantitative elemental analyses on spent catalysts.*

| Element (wt-%) | Reactor 2 spent catalyst | Reference spent catalyst from sulfur-free conditions |
|---|---|---|
| C | 3.5 | 4.5 |
| S | 0.001 | 0 |

Sulfur content of Reactor 2 spent catalyst was very low. Consequently, despite the long test duration (6 months), catalyst was not significantly sulfided in these conditions, in other words, sulfur did not accumulate significantly on the catalyst. This was contrary to literature, where it was stated that the FeCr catalyst is sulfided during use (under sulfur containing conditions) and, in the sulfided state its activity is much lower than in the oxide state (Ratnasamy and Wagner, p. 362, last paragraph). In other experiments (results not shown) the catalyst could be observed to have absorbed some sulphur, which however did not compromise the conversion of CO.

Spent catalyst samples were also examined for metal phases. No metallic iron was detected in the spent catalyst. Thus, no over-reduction in the conditions of the present experiments was taking place, even though the test run lasted for 6 months and impurity concentrations were significant. It can be concluded that the finding of the activity maintenance and resistance to catalyst deactivation are now evidenced for long term runs.

As a conclusion on the catalyst analyses the present inventors demonstrated that FeCr catalyst showed surprising long term tolerance for sulfur-containing feed gas as well as varying sulfur contents in the feed gas. Hence, contrarily to effect suggested in the literature, the sulfur did not accumulate on the catalyst.

*Example 4. Syngas from gasified biomass.*

Materials and methods

Next the method was tested as up-scaled experiment using real syngas. The feed gas for the WGS reaction was synthesis gas from gasification of forest residues. Such a feed comprises inherently some sulfur. Sulfur content in this experiment was measured to be 90 mol-ppm (dry gas).

Feed and product gas compositions were measured using on-line process analysators, of which CO, $CO_2$ and $CH_4$ with IR-detector and $H_2$ with TCD-detector.

The reactor used for WGS was adiabatically operating fixed bed reactor, wherein 97 $dm^3$ of FeCr catalyst was packed as 6 x 6 mm particles. The pressure applied was 510 kPa(g). Temperature in the middle of the catalyst bed was measured as 385 °C.

Only part of the gas obtained from the gasification was directed to the WGS reactor and another part of the feed was set to bypass the WGS reactor in order to control the $H_2$/CO ratio of the product gas.

Results

The gas compositions were measured both from the feed and from the product gas after WGS reaction. In the flow measurements, there were some problems reflected as errors in the given values. These values are compiled in table 6.

*Table 6. Feed and product gas composition (mol-% of dry gas).*

| Component | Feed | Product |
|---|---|---|
| **CO** | 20.1 | 6.1 |
| **$CO_2$** | 33.0 | 40.8 |
| **$H_2$** | 31.0 | 39.0 |
| **$CH_4$** | 3.3 | 2.9 |
| **$H_2$/$CO_2$ -ratio** | 1.6 | 6.4 |

Water content of the feed gas was 39 mol-%.

The exact ratio of the part subjected to WGS reaction and the part by-passed was not reliably determined. As the composition of the product gas corresponds significantly to theoretical equilibrium composition in these conditions, there is a reason to believe that some shift reaction also took place in the by-pass part, which was subjected to a hydrolysis reaction.

**Claims**

1. A method for adjusting hydrogen to carbon monoxide ratio in syngas, comprising the steps of

   - providing a syngas from biomass raw material, said syngas comprising carbon monoxide, hydrogen, 10-40 vol-% of carbon dioxide, and at least one sulfur derivative as impurity, wherein the sulfur content in said syngas is from 30 ppm to 500 ppm;
   - converting a part of said carbon monoxide in the presence of steam to carbon dioxide and hydrogen with a water gas shift reaction employing a FeCr -catalyst at a temperature between 380 °C and 430 °C,
   - converting the syngas to a product selected from alcohols, alkyl carbonates and hydrocarbons having a carbon number from C4 to C90 in a synthesis step.

2. The method according to claim 1 wherein said syngas further comprises $NH_3$.

3. The method according to claim 1 wherein said water gas shift reaction is conducted at a pressure between 1-10 bar, preferably 3-6 bar.

4. The method according to any one of preceding claims wherein said FeCr catalyst is fresh, which fresh catalyst has not been sulfided prior to introduction into the WGS reactor.

5. The method according to any one of preceding claims wherein hydrogen to carbon monoxide ratio is adjusted to a value of at least 1.5, preferably at least 1.7 before the synthesis step.

6. The method according to claim 1 for producing hydrocarbons from a biomass raw material, comprising further steps of

   - after the converting of the part of said carbon monoxide to carbon dioxide and hydrogen with the water gas shift reaction employing the FeCr-catalyst, converting in a Fisher-Tropsch -reactor at least a part of the carbon monoxide and hydrogen contained in the gas into a hydrocarbon composition comprising $C_4$-$C_{90}$ hydrocarbons; and
   - recovering the $C_4$-$C_{90}$ hydrocarbons.

7. The method according to claim 6 wherein hydrogen to carbon monoxide ratio is adjusted before the Fisher-Tropsch conversion to a value of at least 1.7, preferably to 2.

8. The method according to claim 6 wherein said process further comprises a step of reforming the syngas downstream from gasifying the biomass raw material and upstream from said water gas shift reaction.

9. The method according to claim 6 wherein said process further comprises at least one wash step.

10. The method according to any of the preceding claims, wherein the recovered hydrocarbons are further treated to produce a fuel or lubricant for combustion engines.

11. The method according to claim 1, comprising producing hydrocarbons suitable for fuel applications having distillation cut points in the range of about 40 to 350 °C, in particular 180 to 300 °C.

12. The method according to claim 1, comprising producing hydrocarbons suitable for lubricant applications, said hydrocarbons having carbon numbers in the range of 30 to 40.

**Patentansprüche**

1. Verfahren zum Einstellen des Verhältnisses von Wasserstoff zu Kohlenstoffmonoxid in Synthesegas, umfassend die Schritte von

   - Bereitstellen eines Synthesegases aus Biomasse-Rohmaterial, wobei das Synthesegas Kohlenstoffmonoxid, Wasserstoff, 10-40 Vol.-% an Kohlenstoffdioxid und zumindest ein Schwefelderivat als Verunreinigung umfasst, wobei der Schwefelgehalt in dem Synthesegas von 30 ppm bis 500 ppm ist,
   - Umwandeln eines Teils des Kohlenstoffmonoxids in der Gegenwart von Wasserdampf in Kohlenstoffdioxid und Wasserstoff mit einer Wassergas-Shift-Reaktion unter Verwendung eines FeCr-Katalysators bei einer Temperatur zwischen 380°C und 430°C,
- Umwandeln des Synthesegases in ein Produkt ausgewählt aus Alkoholen, Alkylcarbonaten und Kohlenwasserstoffen mit einer Kohlenstoffzahl von C4 bis C90 in einem Syntheseschritt.

**2.** Verfahren nach Anspruch 1, wobei das Synthesegas ferner $NH_3$ umfasst.

**3.** Verfahren nach Anspruch 1, wobei die Wassergas-Shift-Reaktion bei einem Druck zwischen 1-10 Bar, bevorzugt 3-6 Bar, durchgeführt wird.

**4.** Verfahren nach einem der vorstehenden Ansprüche, wobei der FeCr-Katalysator frisch ist, und der frische Katalysator nicht vor Einführung in den WGS-Reaktion sulfidiert wurde.

**5.** Verfahren nach einem der vorstehenden Ansprüche, wobei das Wasserstoff- zu Kohlenstoffmonoxid-Verhältnis auf einen Wert von zumindest 1,5, bevorzugt zumindest 1,7, vor dem Syntheseschritt eingestellt ist.

**6.** Verfahren nach Anspruch 1 zum Herstellen von Kohlenwasserstoffen von einem Biomasse-Rohmaterial, umfassend ferner die Schritte von

- nach dem Umwandeln des Teils des Kohlenstoffmonoxids in Kohlenstoffdioxid und Wasserstoff mit der Wassergas-Shift-Reaktion unter Verwendung des FeCr-Katalysators, Umwandeln in einem Fischer-Tropsch-Reaktor von zumindest einem Teil des Kohlenstoffmonoxids und Wasserstoffs enthalten in dem Gas in eine Kohlenwasserstoffzusammensetzung umfassend $C_4$-$C_{90}$-Kohlenwasserstoffe; und
- Rückgewinnen der $C_4$-$C_{90}$-Kohlenwasserstoffe.

**7.** Verfahren nach Anspruch 6, wobei das Wasserstoff- zu Kohlenstoff-monoxid-Verhältnis vor der Fischer-Tropsch-Umwandlung auf einen Wert von zumindest 1,7, bevorzugt auf 2, eingestellt wird.

**8.** Verfahren nach Anspruch 6, wobei der Prozess ferner einen Schritt des Reformierens des Synthesegases stromabwärts von der Vergasung des Biomasse-Rohmaterials und stromaufwärts von der Wassergas-Shift-Reaktion umfasst.

**9.** Verfahren nach Anspruch 6, wobei der Prozess ferner zumindest einen Waschschritt umfasst.

**10.** Verfahren nach einem der vorstehenden Ansprüche, wobei die rückgewonnenen Kohlenwasserstoffe weiter behandelt werden, um einen Kraftstoff oder ein Schmiermittel für Verbrennungsmotoren herzustellen.

**11.** Verfahren nach Anspruch 1, umfassend Herstellen von Kohlenwasserstoffen geeignet für Kraftstoffanwendungen mit Destillationsgrenzpunkten in dem Bereich von ungefähr 40 bis 350°C, insbesondere 180 bis 300°C.

**12.** Verfahren nach Anspruch 1, umfassend Herstellen von Kohlenwasserstoffen geeignet für Schmiermittelanwendungen, wobei die Kohlenwasserstoffe Kohlenstoffzahlen in dem Bereich von 30 bis 40 aufweisen.

## Revendications

**1.** Procédé d'ajustement du rapport entre l'hydrogène et le monoxyde de carbone dans un gaz de synthèse, comprenant les étapes consistant à

- fournir un gaz de synthèse à partir d'une matière première de biomasse, ledit gaz de synthèse comprenant du monoxyde de carbone, de l'hydrogène, 10 à 40% en volume de dioxyde de carbone et au moins un dérivé soufré comme impureté, dans lequel la teneur en soufre dans ledit gaz de synthèse est entre 30 ppm et 500 ppm ;
- convertir une partie dudit monoxyde de carbone en présence de vapeur en dioxyde de carbone et en hydrogène avec une réaction de décalage eau-gaz utilisant un catalyseur à base de FeCr à une température comprise entre 380°C et 430°C.
- convertir le gaz de synthèse en un produit choisi parmi les alcools, les carbonates d'alkyl et les hydrocarbures ayant un nombre de carbones de C4 à C90 dans une étape de synthèse.

**2.** Procédé selon la revendication 1, dans lequel ledit gaz de synthèse comprend en outre du $NH_3$.

**3.** Procédé selon la revendication 1, dans lequel ladite réaction de décalage eau-gaz est effectuée à une pression comprise entre 1 et 10 bars, de préférence entre 3 et 6 bars.

**4.** Procédé selon l'une quelconque des revendications précédentes, dans lequel ledit catalyseur à base de FeCr est frais, lequel catalyseur frais n'est pas sulfuré avant d'être introduit dans le réacteur de conversion eau-gaz.

**5.** Procédé selon l'une quelconque des revendications précédentes, dans lequel le rapport entre l'hydrogène et le monoxyde de carbone est ajusté à une valeur d'au moins 1.5, de préférence d'au moins 1.7 avant l'étape de synthèse.

**6.** Procédé selon la revendication 1 de production d'hydrocarbures à partir d'une matière première de biomasse, comprenant en outre les étapes consistant à

- après la conversion de la portion dudit monoxyde de carbone en dioxyde de carbone et hydrogène avec la réaction de décalage eau-gaz utilisant un catalyseur FeCr, convertir dans un réacteur Fisher-Tropsch au moins une partie du monoxyde de carbone et de l'hydrogène contenus dans le gaz en une composition d'hydrocarbures comprenant des hydrocarbures en $C_4$ à $C_{90}$ ;
- récupérer les hydrocarbures en $C_4$ à $C_{90}$.

**7.** Procédé selon la revendication 6, dans lequel le rapport entre l'hydrogène et le monoxyde de carbone est ajusté avant la conversion Fisher-Tropsch à une valeur d'au moins 1.7, de préférence de 2.

**8.** Procédé selon la revendication 6, dans lequel ledit procédé comprend en outre une étape de reformage du gaz de synthèse en aval de la gazéification de la matière première de biomasse et en amont de ladite réaction de décalage eau-gaz.

**9.** Procédé selon la revendication 6, dans lequel ledit procédé comprend en outre au moins une étape de lavage.

**10.** Procédé selon l'une quelconque des revendications précédentes, dans lequel les hydrocarbures récupérés sont en outre traités pour produire un carburant ou un lubrifiant pour moteurs à combustion.

**11.** Procédé selon la revendication 1, comprenant la production d'hydrocarbures appropriés pour des applications de carburant ayant des points de coupure de distillation dans la plage d'environ 40 à 350°C, en particulier de 180 à 300°C.

**12.** Procédé selon la revendication 1, comprenant la production d'hydrocarbures appropriés pour des applications lubrifiantes, lesdits hydrocarbures ayant un nombre de carbones allant de 30 à 40.

Syngas
production

WGS
FeCr-catalyst

Synthesis

Product
recovery

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2009246120 A
- DE 102007051181
- DE 19610846 A1
- DE 2610892
- DE 4336790
- US 2005035326 A

### Non-patent literature cited in the description

- **RATNASAMY, C. ; WAGNER, J. P.** Water Gas Shift Catalysis. *Catalysis Reviews,* 2009, vol. 51 (3), 325-440
- Catalyst Handbook. Wolfe Publishing Ltd, 1989, vol. 608, 306
- **RATNASAMY, C. ; WAGNER, J. P.** Water Gas Shift Catalysis. *Catalysis Reviews,* 2009, vol. 51 (3), 340